# EUROPÄISCHE PATENTSCHRIFT

(11) **EP 1 585 267 B1**
(45) Veröffentlichungstag und Bekanntmachung des Hinweises auf die Patenterteilung: **13.06.2007**
(21) Anmeldenummer: 05007582.9
(22) Anmeldetag: 07.04.2005
(51) Int. Cl.: H04L 12/40

(54) **Verfahren zur Erkennung eines Bussystems**
Process for bus recognition
Procédé pour la reconnaissance d'un bus

(30) Priorität: 10.04.2004 DE 102004017670
(43) Veröffentlichungstag der Anmeldung: 12.10.2005
(73) Patentinhaber: ROBERT BOSCH GMBH, 70442 Stuttgart (DE)
(72) Erfinder: Cramer, Thorsten, 35447 Reiskirchen-Bersrod (DE)

(56) Entgegenhaltungen:
- EP-A- 1 198 094
- DE-A1- 19 948 765
- US-A- 6 098 140
- NUNES R ET AL: "An architecture for a home automation system" ELECTRONICS, CIRCUITS AND SYSTEMS, 1998 IEEE INTERNATIONAL CONFERENCE ON LISBOA, PORTUGAL 7-10 SEPT. 1998, PISCATAWAY, NJ, USA,IEEE, US, Bd. 1, 7. September 1998 (1998-09-07), Seiten 259-262, XP010366188 ISBN: 0-7803-5008-1

## Beschreibung

Die Erfindung betrifft ein Verfahren zur Erkennung eines Bussystems zum Datenaustausch zwischen einem Regelgerät und mindestens einer modulartig anschließbaren Zusatzkomponente nach dem Oberbegriff des Patentanspruches 1.
Elektronische Bussysteme zum Datenaustausch und zur Kommunikation zwischen mehreren Komponenten oder Bauteilen von elektrotechnischen Geräten, Anlagen und Einrichtungen sind allgemein bekannt. In der Regel besitzen die Komponenten oder Bauteile dasselbe abgestimmte Bussystem wie das zentrale Regelgerät, so dass eine Ankopplung problemlos möglich ist.
Insbesondere bei Heizgeräten, welche als Gebrauchsgüter meistens mehrere Jahrzehnte in Gebäuden im Einsatz sind, muss bei der Verwendung von Bussystemen die Kompatibilität zu älteren Versionen oder anderen Bussystemen gewährleistet sein. Begründet ist dies einerseits mit relativ langen Produkt-Gebrauchsjahren, weil während dieser Zeit beispielsweise Umbauten am Gebäude oder eine Umstellung der Brennstoffart vorgenommen werden, die wiederum den nachträglichen Einbau von heiztechnischen Zusatzkomponenten erfordern. Andererseits müssen viele heiz- und regeltechnische Varianten berücksichtigt werden. Daher ist bei der Einführung eines neuen Regelgerätes mit einem entsprechenden Bussystem die Kompatibilität zu den bestehenden Bussystemen von modulartig anschließbaren Zusatzkomponenten, wie zum Beispiel von Fernbedienungsgeräten, genauso wichtig wie eine einfache Installation und Montage der Komponenten vor Ort.
Aus der DE 199 48 765 A1 ist ein Bussystem bekannt, bei dem eine Zentraleinheit zyklisch oder permanent die aktuelle Stromentnahme als Summe der aktuellen Stromaufnahmen von Modulen erfasst und daraus einen Referenzwert aktuell anpasst. Es wird also mit einer gemeinsamen Versorgungsgleichspannung ein Bussystem gebildet, bei dem sich lediglich die Stromaufnahme der einzelnen Module unterscheidet.

Der Erfindung liegt daher die Aufgabe zugrunde, ein einfaches Verfahren zur Erkennung eines Bussystems zum Datenaustausch zwischen einem Regelgerät und modulartig anschließbaren Zusatzkomponenten mit mindestens zwei unterschiedlichen Bussystemen bei einem Heizgerät zu schaffen.

Erfindungsgemäß wurde dies mit den Merkmalen des Patentanspruches 1 gelöst. Vorteilhafte Weiterbildungen sind den Unteransprüchen zu entnehmen.
Das Verfahren zur Erkennung eines Bussystems zum Datenaustausch zwischen einem Regelgerät und mindestens einer modulartig anschließbaren Zusatzkomponente ist **dadurch gekennzeichnet, dass** das Regelgerät weitgehend unabhängig arbeitende Schaltungsteile für mindestens zwei unterschiedliche Bussysteme besitzt. Ein dem jeweiligen Bussystem zugeordneter Schaltungsteil wird automatisch aktiviert oder deaktiviert, indem ein das Bussystem einer Zusatzkomponente charakterisierender Spannungswert über einen Komparator mit eingestelltem Schwellwert erfasst und ausgewertet wird.
Dazu schaltet der Ausgang des Komparators über eine Transistorlogik die jeweils einem Bussystem zugeordneten Schaltungsteile um. Ein Mikroprozessor erhält ein Statussignal über das vorliegende Bussystem und ruft die einem Bussystem zugeordneten Datenaustausch- und Kommunikationsroutinen auf. Die Versorgungsspannung ist vom Bussystem unabhängig und liegt bei vorzugsweise etwa 3,3 Volt.
Ein erstes Bussystem arbeitet mit einem Konstantstrom von 10 bis 19 Milliampére, vorzugsweise 13 Milliampére. Dabei liegt der charakterisierende Spannungswert an der Zusatzkomponente maximal zwischen 5 und 6 Volt. Dagegen arbeitet ein zweites Bussystem mit einer Mindestspannung von etwa 10 Volt, und der charakterisierende Spannungswert an der Zusatzkomponente liegt bei maximal etwa 8 Volt. Vorzugsweise sind alle charakterisierenden Spannungswerte der Zusatzkomponenten am Regelgerät als Schwellwerte einstellbar.
Mit dem erfindungsgemäßen Verfahren und der dazu gehörenden Anordnung wird ein sicheres Verfahren zur Erkennung eines Bussystems zum Datenaustausch zwischen einem Regelgerät und mindestens einer modulartig anschließbaren Zusatzkomponente geschaffen. Automatisch wird hardwareseitig der für die Kommunikation zuständige Schaltungsteil aktiviert bzw. deaktiviert

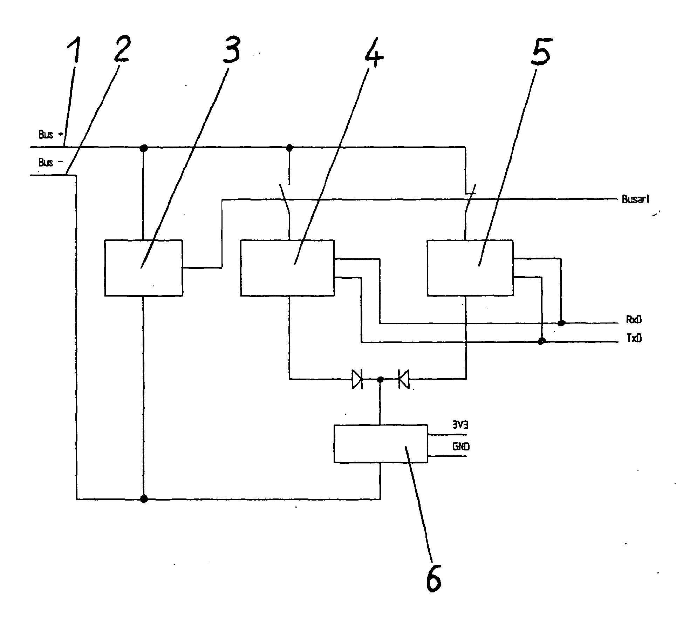

Die Zeichnung stellt ein Ausführungsbeispiel der Erfindung dar und zeigt in einer einzigen Figur ein Blockschaltbild für ein Regelgerät zur automatischen Erkennung eines Bussystems.

Zwischen den Anschlüssen 1, 2 für das Bussystem einer Zusatzkomponente stellt ein Komparator 3 den charakterisierenden Spannungswert durch Vergleich mit einem eingestellten Schwellwert fest und aktiviert die entsprechende Busart, nämlich zwei weitgehend unabhängig arbeitende Schaltungsteile 4, 5 im Regelgerät, welche jeweils einem der beiden unterschiedlichen Bussysteme zugeordnet sind. Unabhängig vom Bussystem erfolgt die Spannungsversorgung 6 mit etwa 3,3 Volt.

## Patentansprüche

1. Verfahren zur Erkennung eines Bussystems zum Datenaustausch zwischen einem Regelgerät und mindestens einer modulartig anschließbaren Zusatzkomponente, wobei verschiedene Zusatzkomponenten mit mindestens zwei unterschiedlichen Bussystemen eingesetzt werden,
**dadurch gekennzeichnet, dass** das Regelgerät weitgehend unabhängig arbeitende Schaltungsteile (4, 5) für mindestens zwei unterschiedliche Bussysteme besitzt und dass ein dem jeweiligen Bussystem zugeordneter Schaltungsteil (4, 5) automatisch aktiviert oder deaktiviert wird, indem ein das Bussystem der Zusatzkomponente charakterisierender Spannungswert über einen Komparator (3) mit eingestelltem Schwellwert erfasst und ausgewertet wird.

2. Verfahren nach Anspruch 1,
**dadurch gekennzeichnet, dass** der Ausgang des Komparators über eine Transistorlogik die jeweils einem Bussystem zugeordneten Schaltungsteile (4, 5) umschaltet.

3. Verfahren nach Anspruch 1 oder 2,
**dadurch gekennzeichnet, dass** ein Mikroprozessor ein Statussignal über das vorliegende Bussystem erhält und die einem Bussystem zugeordneten Datenaustausch- und Kommunikationsroutinen aufruft.

4. Verfahren nach einem der Ansprüche 1 bis 3,
**gekennzeichnet durch** eine vom Bussystem unabhängige Versorgungsspannung von 3,3 Volt.

5. Verfahren nach einem der Ansprüche 1 bis 4,
**dadurch gekennzeichnet, dass** ein erstes Bussystem mit einem Konstantstrom von 10 bis 19 Milliampére arbeitet, und dass der charakterisierende Spannungswert an der Zusatzkomponente maximal zwischen 5 und 6 Volt liegt.

6. Verfahren nach einem der Ansprüche 1 bis 5,
**dadurch gekennzeichnet, dass** ein zweites Bussystem mit einer Mindestspannung von 10 Volt arbeitet, und dass der charakterisierende Spannungswert an der Zusatzkomponente bei maximal 8 Volt liegt.

7. Verfahren nach einem der Ansprüche 1 bis 6,
**dadurch gekennzeichnet, dass** alle charakterisierenden Spannungswerte der Zusatzkomponenten am Regelgerät als Schwellwerte einstellbar sind.

## Claims

1. A method for detecting a bus system for data exchange between a controller and at least one additional component which can be connected in a modular manner, wherein various additional components comprising at least two different bus systems are used, **characterised in that** the controller has largely independently operating circuit parts (4, 5) for at least two different bus systems and that a circuit part (4, 5) allocated to the respective bus system is automatically activated or deactivated by detecting and evaluating a voltage value characterising the bus system of the additional component by means of a comparator (3) with a set threshold value.

2. The method according to claim 1, **characterised in that** the output of the comparator switches over the circuit parts (4, 5) respectively allocated to a bus system via a transistor logic.

3. The method according to claim 1 or 2, **characterised in that** a microprocessor receives a status signal via the present bus system and calls the data exchange and communication routines allocated to a bus system.

4. The method according to any one of claims 1 to 3, **characterised by** a supply voltage of 3.3 Volts independent of the bus system.

5. The method according to any one of claims 1 to 4, **characterised in that** a first bus system operates with a constant current of 10 to 19 milli-amperes and that the maximum characterising voltage value at the additional component lies between 5 and 6 Volts.

6. The method according to any one of claims 1 to 5, **characterised in that** a second bus system operates with a minimum voltage of 10 Volts and that the maximum characterising voltage value at the additional component is 8 Volts.

7. The method according to any one of claims 1 to 6, **characterised in that** all the characterising voltage values of the additional components can be adjusted as threshold values at the controller.

## Revendications

1. Procédé destiné à la détection d'un système de bus pour l'échange de données entre un appareil de réglage et au moins un composant supplémentaire pouvant être raccordé à la façon d'un module, différents composants supplémentaires étant activés avec au moins deux systèmes de bus différents, **caractérisé en ce que** l'appareil de réglage présente des parties de circuit (4, 5) travaillant de façon largement indépendante pour au moins deux systèmes de bus différents et **en ce qu'**une partie de circuit (4, 5) attribuée au système de bus respectif est activée ou désactivée automatiquement du fait qu'une valeur de tension caractérisant le système de bus du composant supplémentaire est détectée et analysée au moyen d'un comparateur (3) avec une valeur seuil réglée.

2. Procédé selon la revendication 1, **caractérisé en ce que** la sortie du comparateur commute au moyen d'une logique de transistor les parties de circuit (4, 5) attribuées chacune à un système de bus.

3. Procédé selon la revendication 1 ou 2, **caractérisé en ce qu'**un microprocesseur reçoit un signal d'état sur le présent système de bus et appelle les routines d'échange de données et de communication attribuées à un système de bus.

4. Procédé selon l'une quelconque des revendications 1 à 3, **caractérisé par** une tension d'alimentation, indépendante du système de bus, de 3,3 Volts.

5. Procédé selon l'une quelconque des revendications 1 à 4, **caractérisé en ce qu'**un premier système de bus travaille avec un courant constant de 10 à 19 milliampères et **en ce que** la valeur de tension caractéristique sur le composant supplémentaire se situe au maximum entre 5 et 6 Volts.

6. Procédé selon l'une quelconque des revendications 1 à 5, **caractérisé en ce qu'**un second système de bus travaille avec une tension minimale de 10 Volts et **en ce que** la valeur de tension caractéristique sur le composant supplémentaire se situe au maximum à 8 Volts.

7. Procédé selon l'une quelconque des revendications 1 à 6, **caractérisé en ce que** toutes les valeurs de tension caractéristiques des composants supplémentaires sur l'appareil de réglage sont réglables en tant que valeurs seuil.
